Europäisches Patentamt

European Patent Office

Office européen des brevets

(11) Veröffentlichungsnummer: **0 277 503**
**A2**

(12) **EUROPÄISCHE PATENTANMELDUNG**

(21) Anmeldenummer: **88100398.2**

(22) Anmeldetag: **13.01.88**

(51) Int. Cl.⁴ **G02F 2/00**

(30) Priorität: **19.01.87 DE 3701351**

(43) Veröffentlichungstag der Anmeldung:
**10.08.88 Patentblatt 88/32**

(84) Benannte Vertragsstaaten:
**AT BE DE FR GB IT NL**

(71) Anmelder: **Siemens Aktiengesellschaft Berlin und München**
**Wittelsbacherplatz 2**
**D-8000 München 2(DE)**

(72) Erfinder: **von Helmolt, Clemens, Dr.**
**Schlüterstrasse 27**
**D-1000 Berlin 12(DE)**

(54) **Netzwerk, insbesondere als optische Homodyn- oder Heterodyn-Empfängerschaltung ausgebildet.**

(57)

1. Optisches Netzwerk, insbesondere als Homodyn-oder Heterodyn-Empfänger ausgebildet.

2.1 Der Lokaloszillator (2) eines optischen Homodyn-oder Heterodynempfängers mit einem optischen Wellenleiternetzwerk (1) muß zur Erhaltung der Stabilität und Abstimmbarkeit des Oszillators (2) gegen im allgemeinen anisotrope Reflexionen aus dem Netzwerk (1) isoliert sein.

2.2 In Richtung der hinlaufenden optischen Welle sind ein Polarisationsfilter (10), ein Polarisationskonverter (11) und ein Phasenschieber (12) im Strahlengang der vom Oszillator (2) emittierten und vom Netzwerk (1) reflektierten Welle hintereinander angeordnet.

2.3 Optischer Homodyn-oder Heterodynempfang

# FIG 5

## Netzwerk, insbesondere als optische Homodyn-oder Heterodyn-Empfängerschaltung ausgebildet

Die Erfindung betrifft ein Netzwerk, welches:
- aus optischen und elektro-optischen, optisch reziproken Elementen aufgebaut ist,
- an eine Komponente koppelbar ist, die eine optische Welle in dieses Netzwerk einspeist,
- anisotrope Reflexionen bewirkende Stellen aufweist und
- eine Anordnung von Elementen besitzt, welche die optische Sende-Komponente gegen anisotrope Reflexionen aus diesem Netzwerk isolieren,
insbesondere ein als optische Homodyn-oder Heterodyn-Empfängerschaltung ausgebildetes Netzwerk.

Auf dem Gebiet der optischen Nachrichtentechnik ist es bekannt, was keines druckschriftlichen Nachweises bedarf, einen optischen Sender gegen Reflexionen zu isolieren. Derartige Reflexionen entstehen insbesondere an der Einkoppelstelle eines Lasers in eine Monomode-Faser oder in einen Monomode-Wellenleiter. Solche Reflexionsstellen sind im wesentlichen polarisationsunabhängig und in diesem Sinne isotrop.

Zur Isolierung gegen isotrope Reflexionen wird bekanntermaßen beispielsweise ein Polarisationsfilter und ein Viertelwellenlängenplättchen eingesetzt, welches mit einer perfekten Antireflexionsschicht versehen und - in Richtung der hinlaufenden Welle gesehen - hinter dem Polarisationsfilter angeordnet ist. Eine zur isotropen Reflexionsstelle hinlaufende polarisierte Welle verläßt das Filter linear polarisiert in der vom Filter vorgegebenen Polarisationsrichtung, tritt in das Viertelwel lenlängenplättchen derart linear polarisiert ein und verläßt dieses zirkular polarisiert. Sie trifft so auf die isotrope Reflexionsstelle, läuft also ebenfalls zirkular und orthogonal zur hinlaufenden Welle polarisiert zurück und wird sodann auf ihrem weiteren Weg in der zur hinlaufenden Welle entgegengesetzten Richtung im Viertelwellenlängenplättchen linear, und, an dieser Stelle, orthogonal zur hinlaufenden Welle polarisiert. Das Filter kann damit die rücklaufende Welle vollständig zurückhalten, so daß die die optische Welle aussendende Komponente gegen derartige Reflexionen geschützt ist.

Dieses bekannte Isolierungsprinzip basiert auf der resultierenden Polarisationstransformation, die ähnlich der eines Halblängenwellenplättchens ist, und kann bei Verwendung von Jones-Matrizen (siehe dazu Journ. of Optical Society of America 31 (1941), S. 488-493) durch die Gleichung

$$M\,{}^T_Q\,(rI)M_Q = e^{-g}M_H \qquad (1)$$

ausgedrückt werden, in der $M_Q$ die Jones-Matrix des im Winkel von 45° zur Polarisationsrichtung der emittierten Welle angeordneten Viertelwellenlängenplättchens, $M\,{}^T_Q$, die zur Matrix $M_Q$ transponierte Matrix, I die Einheitsmatrix, r den Reflexionskoeffizienten, g einen komplexen Exponenten und $M_H$ die Jones-Matrix des im Winkel von 45° zur Polarisationsrichtung der emittierten Welle angeordneten Halbwellenlängenplättchens. Speziell ist

$$M_Q = \frac{1}{\sqrt{2}}\begin{pmatrix} 1 & -j \\ -j & 1 \end{pmatrix}, \quad M_H = \begin{pmatrix} 0 & -j \\ -j & 0 \end{pmatrix} \qquad (2)$$

wobei j die imaginäre Einheit bedeutet.

Durch die Gleichung (1) wird beispielesweise eine einfallende horizontal polarisierte ebene Welle in eine reflektierte Welle transformiert, die vertikal und damit zur einfallenden Welle orthogonal polarisiert ist.

Aufgabe der Erfindung ist es, ein optisches Netzwerk so auszubilden, daß es eine reflexionsempfindliche Quelle gegen anisotrope Reflexionen isoliert. Die anisotropen Reflexionen können von anisotrop reflektierenden Stellen stammen oder auch von mindestens zwei isotropen Reflexionstellen, und zu einer resultierenden anisotropen Reflexion transformiert sein. Derartige Erscheinungen treten bei komplexen Netzwerken auf, auch wenn dort nur optisch reziproke Elemente enthalten sind.

Diese Aufgabe wird gemäß der Erfindung gelöst bei einem Netzwerk der eingangs genannten Art durch
- ein Filter für linear polarisierte Wellen,
- einen Modenkoppler und
- einen Phasenschieber,
zur Reflexionsisolierung der optischen Sende-Komponente, wobei diese, die Reflexionsisolierung bewirkenden Elemente - in Richtung der hinlaufenden optischen Welle gesehen - in der angegebenen Reihenfolge hinter der Einkoppelstelle der optischen Sende-Komponente liegen.

Die wesentliche Bedeutung und die überraschende, mit der erfindungsgemäßen technischen Lehre erzielbare Gesamtwirkung beruht auf der Erkenntnis, daß es bei optischen Netzwerken, sofern diese lediglich optisch reziproke Elemente enthalten, in jedem Falle ausreicht, ein Polarisationsfilter für lineare Polarisierung, eine steuerbare Modenkoppeleinrichtung und eine Einrichtung zur Phasenverschiebung vorzusehen, um die zu schützende optische Komponente, insbesondere einen Halbleiterlaser, gegen anisotrope Reflexionen zu isolieren.

Diese Tatsache läßt sich anhand der Jones-Matrizen wie folgt erläutern:

Ersetzt man das Viertelwellenlängenplättchen durch eine geeignete Kompensationsrichtung, kann die Gleichung (1) zur Isolation eines reziproken Netzwerkes mit i gekoppelten reflektierenden Stellen bzw. Toren und verschwindenden inneren Reflexionskoeffizienten zwischen diesen Elementen verallgemeinert werden zu

$$M_C^T \left( \sum_i M_i \right) M_C = e^{-g} M_H, \quad i = 1, 2, ..., n \qquad (2)$$

in der $M_C$ die Jones-Matrix der Kompensationseinrichtung und $M_i$ symmetrische Matrizen bedeuten. n ist eine beliebige natürliche Zahl.

Die durch die Gleichung (2) gegebene Verallgemeinerung ist möglich, weil die komplexe symmetrische Matrix $\sum_i M_i$ immer als eine Transformation $M_S^T M_S = \sum_i M_i$ geschrieben werden kann. Für optische Einrichtungen mit endlichen Verlusten existiert die inverse Matrix $M_S^{-1}$, und die Lösung der Gleichung (2) ist gegeben durch

$$M_C = M_S^{-1} M_Q . e^{-g/2}. \qquad (3)$$

Für ein Netzwerk mit n reziproken Elementen, die durch Jones-Matrizen $M_{Ni}$ mit $i = 1, 2, ... n$ und n = natürliche Zahl gekennzeichnet sind und denen je eine durch eine Mikrowellenstreumatrix $S_{Ri}$ gekennzeichnete Reflexionsstelle zugeordnet ist, die bewirkt, daß eine durch das betreffende Element der zugeordneten Reflexionsstelle zugeleitete und dort reflektierte Welle wieder durch dieses Element hindurchgeht, wird Isolation gemäß Gleichung (2) mit

$$M_i = M_{Ni}^T \, S_{Ri} M_{Ni}, \quad i = 1, 2, ..... n \qquad (4)$$

erhalten, wobei die $S_{Ri}$ wegen der vorausgesetzten Reziprozität symmetrisch sind, d.h. $S_{Ri} = S_{Ri}^T$ gilt. Jede Matrix $S_{Ri}$ kann eine isotrope, insbesondere aber auch eine anisotrope Reflexion charakterisieren. Diese Matrizen können alle verschieden von einander sein. Danach kann ein reziprokes optisches Netzwerk, insbesondere ein Netzwerk mit anisotrop reflektierenden Stellen, mit einer einzigen Anordnung kompensiert werden, die durch eine Jones-Matrix $M_C$ gemäß Gleichung (3) charakterisiert ist.

In den Gleichungen (2) und (3) setzt sich der Exponent g aus einem Dämpfungstherm a und einem Phasentherm $\phi$ gemäß $g = a + j\phi$ zusammen. Danach kann jede reziproke Einrichtung mit einer Jones-Matrix $M_C$ gemäß Gleichung (3), bei der a und $\phi$ kontinuierlich veränderbar sind, für eine Anordnung zur Isolierung eines beliebigen optischen Netzwerks mit einer Jones-Matrix $\sum_i M_i$ verwendet werden.

Ausgehend von Gleichung (3) ergeben sich die Jones-Vektoren der erforderlichen Polarisationszustände zu $J_1 = M_c . H$ bzw. $J_2 = M_c . V$, wobei $H = \left( \begin{smallmatrix} 1 \\ 0 \end{smallmatrix} \right)$ bzw. $V = \left( \begin{smallmatrix} 0 \\ 1 \end{smallmatrix} \right)$ die Jones-Vektoren der horizontal bzw. der vertikal polarisierten Wellen sind. Die reflektierte Welle ist dann orthogonal zur hinlaufenden polarisiert, so daß -wie weiter oben schon erwähnt - eine Beeinflussung der Modenkopplung und eine Phasenschiebung hinreichend sind.

Bezüglich der Beeinflußbarkeit der Modenkopplung kommen nach der Lehre der Erfindung zwei bevorzugte Möglichkeiten zur Anwendung. Hierzu kann nämlich ein reziproker TE/TM-Konverter vorgesehen werden oder ein reziproker Richtkoppler, der im optischen Netzwerk z.B. ohnehin für andere Zwecke erforderlich ist, als steuerbare Komponente ausgebildet sein.

Unabhängig davon ist es für Ausführungsformen der Erfindung sehr vorteilhaft, in Richtung laufender Wellen gesehen, unmittelbar vor der Modenkopplungseinrichtung einen Richtkoppler vorzusehen, der an dieser Stelle die Überwachung der Amplitude der rücklaufenden Welle und die Regelung der hin-und der rücklaufenden Wellen auf Orthogonalität ermöglicht.

Weitere Ausführungsformen der Erfindung beruhen auf den oben erwähnten Funktionsprinzipien und zielen auf Ausbildungen monolithischer integrierter Bauelemente ab. Zu den Gesichtspunkten, unter denen sich die betreffenden zu integrierenden Komponenten jeweils zusammenfassen lassen, gehört vorrangig das jeweils benötigte Substratmaterial. Das bedeutet, sofern Laser und Photodioden mit anderen Komponenten monolithisch integriert werden sollen, ist halbleitendes elektro-optisches Material erforderlich. Anderenfalls kommt auch dielektrisches elektro-optisches Material, insbesondere Lithiumniobat - $LiNbO_3$ -als das derzeit dafür am weitesten verbreitete zur Anwendung.

Die Konfigurationen monolithischer Bauelemente können sodann unter mehr wirtschaftlichen Gesichtspunkten, z.B. Bedarf an einzelnen Integrationstypen, Zusammensetzbarkeit zu hybriden Aufbauten und dergleichen, sowie nach sonstigen Kriterien vorgenommen werden. Dabei sollten allerdings Elemente mit zusammengehörigen Funktionen, hier insbesondere für Modenkopplung und Phasenschiebung, möglichst nicht getrennt werden.

Ausführungsformen der Erfindung, vornehmlich die bevorzugten, auf die sich auch die Unteransprüche beziehen, sind in der Zeichnung schematisch dargestellt und werden anhand der Figuren nachfolgend näher erläutert. Dabei zeigen:

Fig. 1: eine Draufsicht auf einen integrierten optischen Homodyn-oder Heterodynempfänger-Baustein mit einem Lokaloszillator, der gegen Reflexionen durch ein Filter, einen TE/TM-Konverter und einen Phasenschieber isoliert ist,

Fig. 2: eine Draufsicht, ähnlich Fig. 1, jedoch mit einem in der Modenkopplung steuerbaren Richtkoppler,

Fig. 3: in Draufsicht ein monolithisches Bauteil mit einem Filter und einer Einrichtung zur TE/TM-Konversion und Phasenschiebung,

Fig. 4: in Draufsicht ein monolithisches Bauteil mit getrennten Elementen zur TE/TM-Konversion und zur Phasenschiebung,

Fig. 5: in Draufsicht ein monolithisches Bauteil mit Filter, TE/TM-Konverter und Phasenschieber,

Fig. 6: in Draufsicht ein monolithisches Bauteil mit Filter, Richtkoppler mit Monitor-Ausgang, TE/TM-Konverter und Phasenschieber,

Fig. 7: in Draufsicht für hybriden Aufbau einen Lokaloszillator und ein Filter,

Fig. 8: in Draufsicht eine Einrichtung entsprechend Fig. 7, jedoch als monolithisches Bauelement und Fig. 9: das äquivalente Jones-Vektor-Diagramm des Empfängers nach Fig. 1 ohne Lokaloszillator und Polarisationsfilter.

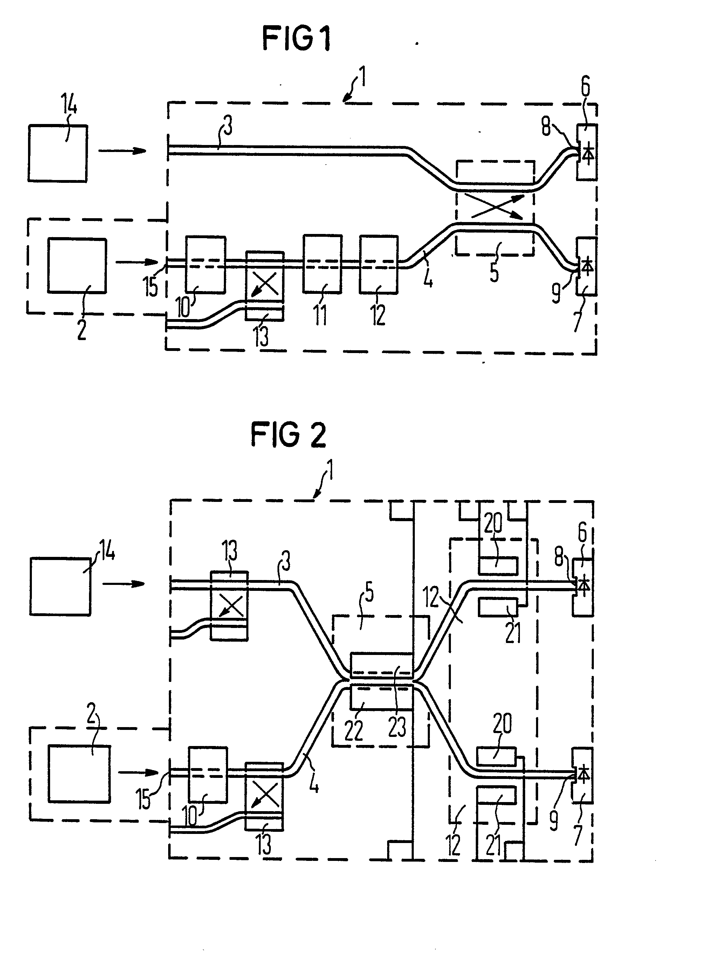

Der optische Homodyn-oder Heterodynempfänger nach Fig. 1 ist als optisches Wellenleiter-Netzwerk 1 mit optisch reziproken Komponenten sowie dem an dieses Netzwerk 1 gekoppelten Lokaloszillator 2 und den Photodioden 6, 7 als optische Detektoren bzw. opto-elektrische Wandler aufgebaut. Das Netzwerk 1 enthält zwei Streifenwellenleiter 3 und 4, die beispielsweise durch einen optischen Richtkoppler 5 miteinander gekoppelt sind. Der Lokaloszillator 2 speist die von ihm emittierte optische Welle an der Einkoppelstelle 15 in den Wellenleiter 4 ein; von einem entfernt liegenden Sender, z.B. einer Teilnehmerstation 14, gelangt das empfangene optische Signal in den Wellenleiter 3 des optischen Empfängers.

Die Koppelstellen der Wellenleiter 3, 4 mit den Photodioden 6, 7 stellen Reflexionsstellen 8, 9 dar, an denen die hinlaufenden optischen Wellen reflektiert werden. Hierbei handelt es sich im allgemeinen um anisotrop reflektierende Stellen (siehe dazu: IEEE Journ. of Quantum Electr. WE-8 (1972), S. 470-476).

Zur Isolierung des Lokaloszillators 2 gegen Reflexionen aus dem Netzwerk 1, insbesondere von den Stellen 8 und 9, ist am Wellenleiter 4 eine Anordnung vorgesehen, und zwar-in Richtung der hinlaufenden Welle, also von der Einkoppelstelle 15 zu den Reflexionsstellen 8 und 9 gesehen - ein Filter 10 für lineare Polarisation, ein TE/TM-Konverter 11 und ein Phasenschieber 12.

Die Isolationswirkung dieser Anordnung läßt sich folgendermaßen erklären:

An der Einkoppelstelle 15 soll die rücklaufende, reflektierte Welle nicht existieren. Das ist möglich, wenn die hinlaufende Welle und die rücklaufende Welle zwischen dem Filter 10 und dem Modenkoppler linear polarisiert sind und zueinander orthogonale Polarisationszustände aufweisen. Diese Voraussetzung wird mit dem TE/TM-Konverter 11 und dem Phasenschieber 12 erreicht, die einen linearen Polarisationszustand in jeden beliebigen elliptischen Polarsationszustand transformieren können. Mittels dieser Elemente wird genau einer der beiden möglichen i.a. elliptischen Polarisationszustände $J_1$ und $J_2$ am Ausgang des Phasenschiebers (Eingang des restlichen Netzwerks) eingestellt, so daß die reflektierte Welle orthogonal zur hinlaufenden Welle polarisiert ist. Diese beiden Polarisationszustände $J_i$ (i = 1, 2) sind dadurch ausgezeichnet, daß in einer Symmetrieebene des optischen Netzwerks, die bezüglich der im Wellenleiter 4 hin-und rücklaufenden Wellen existiert, die aber nicht unbedingt physikalisch zugänglich sein muß, links-bzw. rechtszirkulare Polarisation herrschen. Diese Polarisationszustände $J_i$ sind mathematisch durch $J_1 = M_c \cdot H$ bzw. $J_2 = M_c \cdot V$ gekennzeichnet, wobei $H = \begin{pmatrix} 1 \\ 0 \end{pmatrix}$ bzw. $V = \begin{pmatrix} 0 \\ 1 \end{pmatrix}$ die Jones-Vektoren der horizontalen bzw. vertikalen linearen Polarisation bedeuten. Zwischen dem Phasenschieber 12 und der Reflexionsstelle 9 sind hin-und rücklaufende Welle elliptisch polarisiert, jedoch im allgemeinen nicht orthogonal.

Die Fig. 1 soll weiterhin verdeutlichen, daß das gesamte optische Netzwerk 1, gegebenenfalls einschließlich des Lokaloszillators 2, als monolithisches integriertes Bauteil ausgebildet werden kann.

Die in Fig. 2 gezeigte Ausführungsform der Erfindung unterscheidet sich von der in Fig. 1 dargestellten dadurch, daß die Modenkopplungsfunktion von einem modifizierten Richtkoppler 5 mit wahrgenommen wird, der dazuals elektrisch steuerbare Komponente ausgebildet und dementsprechend mit Elektroden 22, 23 versehen ist.

Weiterhin befinden sich Phasenschieber 12 mit Elektroden 20, 21, zumindest am Wellenleiter 4, zwischen dem in der Modenkopplung steuerbaren Richtkoppler 5 mit seinen Elektroden 22, 23 und den betreffenden Photodi oden 6 bzw. 7. Auch diese Konfiguration läßt sich mit oder ohne Lokaloszillator 2 als monolithisches integriertes Bauelement ausbilden.

Weiterhin enthalten die Ausführungsformen gemäß den Fig. 1 und 2 noch einen Richtkoppler 13. Bei der Ausführungsform gemäß Fig. 1 ist dieser Koppler 13 zwischen dem Filter 10 und dem TE/TM-Konverter 11 angeordnet und als Modensplitter ausgebildet. Ein solcher Modensplitter ist wie ein Richtkoppler aufgebaut, also mit einem Wellenleiter 26 versehen, der an den Wellenleiter 4 gekoppelt ist und somit einen Ausgang für den Anschluß eines Monitors oder zur Abnahme einer Steuergröße für die Einstellung der Modenkopplung und Phasenschiebung bereit stellt. Bei der Ausführungsform gemäß Fig. 2 kann der Koppler 13 sowohl am Wellenleiter 3 als auch am Wellenleiter 4, dort entweder vor oder hinter dem Polarisationsfilter 10, angeordnet sein.

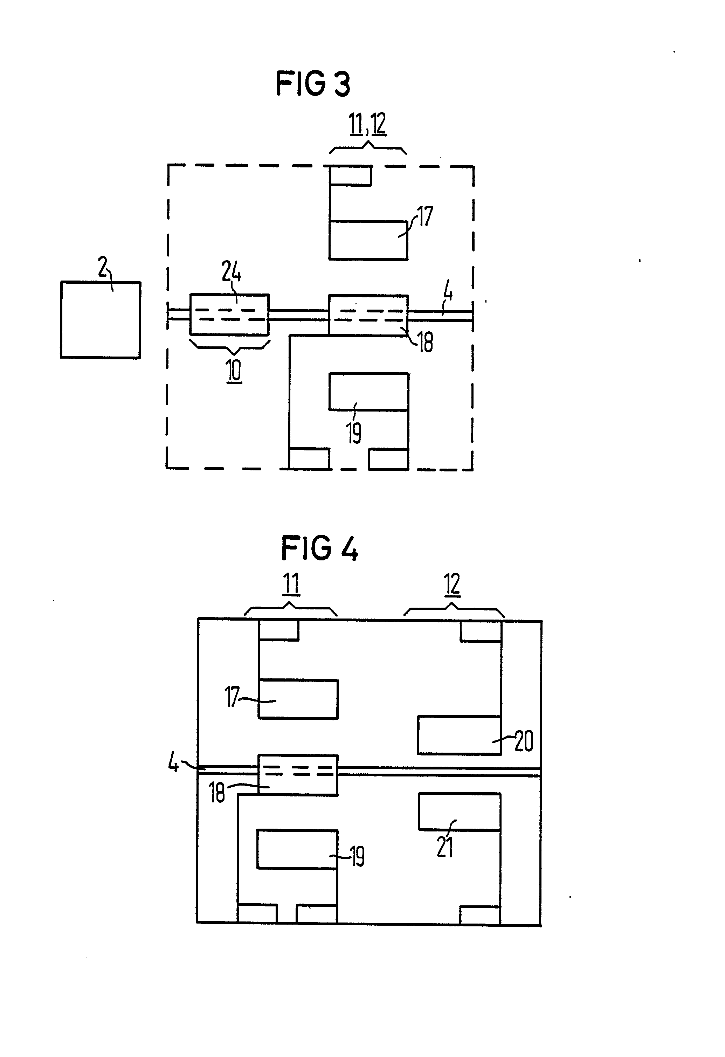

Die Fig. 3 zeigt eine Variante der Anordnung für die Isolierung des Lokaloszillators 2 gegen Reflexionen aus dem - hier nicht weiter dargestellten - Netzwerk 1.

Diese Variante kann als monolithisches Bauteil ausgebildet sein und enthält für den Wellenleiter 4 das Filter 10 - in Form einer Metallschicht 24 oberhalb des Wellenleiters 4, die infolge unterschiedlicher optischer Dämpfung der TE-und TM-Komponenten die TE-Komponente einer linear polarisierten optischen Welle passieren läßt - sowie eine Komponente 11, 12, die sowohl die TE/TM-Konversion als auch die Phasenschiebung bewirkt. Dazu sind für den Wellenleiter 4 eine bedekkende Elektrode 18 sowie zwei flankierende Elektroden 17 und 19 vorgesehen. Zumindest die bedeckende Elektrode 18 wird, im Hinblick auf die optische Dämpfung einer Metallschicht, aus einem elektrisch leitenden, optisch transparenten Material hergestellt. Als Substratmaterial kann für eine solche Konfiguration, ohne elektro-optische bzw. opto-elektrische Wandler, z.B. Lithiumniobat - LiNbO$_3$ -zur Anwendung kommen.

In Fig. 4 ist ein monolithisches Bauteil mit einem TE/TM-Wandler 11 und einem Phasenschieber 12 für die im Wellenleiter 4 geführte Welle dargestellt. Dort werden - getrennt voneinander - für die TE/TM-Wandlung ein vertikales, für die Phasenschiebung ein horizontales elektrisches Feld erzeugt.

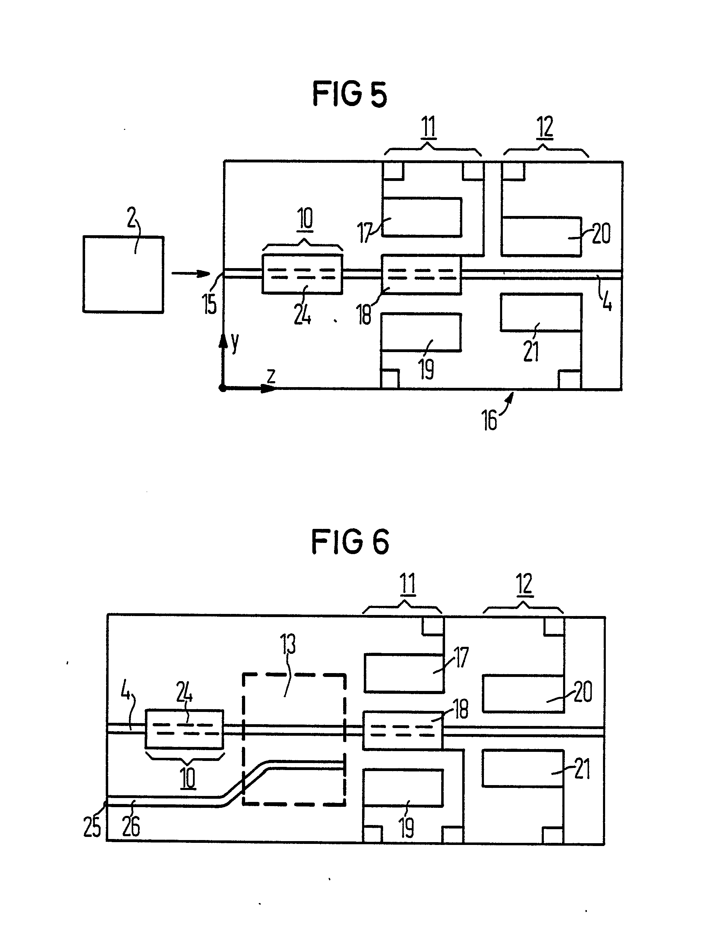

Die in Figur 5 dargestellte Ausführungsform der Anordnung zur Reflexionsisolierung für ein optisches Netzwerk gemäß Figur 1 ist auf einem in x-Richtung geschnittenen LiNbO$_3$-Substrat 16 integriert. Der Wellenleiter 4 besteht aus einem Ti-diffundierten, in z-Richtung verlaufenden Monomode-Streifenwellenleiter 4, auf den das Polarisationsfilter 10 und die Einrichtungen 11, 12 aufgebracht sind. Die Länge des Wellenleiters 4 beträgt etwa 3 cm. An ihn ist ein Lokaloszillator 2 in Form einer HLP 5400-Laserdiode stoßgekoppelt.

Die Einrichtung zur Modenkopplung besteht aus einem elektro-optischen Polarisationskonverter, speziell einem TE/TM-Konverter 11, und aus einem elektro-optischen Phasenschieber 12, beides reziproke Elemente. Der Polarisationskonverter ist zwischen dem Polarisationsfilter 10 und dem Phasenschieber 12 angeordnet und enthält beispielsweise drei in Längsrichtung des Wellenleiters 4 verlaufende Elektroden 17, 18, 19.

Eine dieser Elektroden, beispielsweise die Elektrode 18, bedeckt den Wellenleiter 4; und die beiden anderen sind als flankierende Elektroden 17 und 19 zu beiden Seiten des Wellenleiters 4 angeordnet. Die Polarisationskonversion ergibt sich durch Anlegen von Spannungen an die drei Elektroden 17, 18, 19. Der Phasenschieber 12 besteht aus den beiden flankierenden, in Längsrichtung des Wellenleiters 4 verlaufenden und zu seinen beiden Seiten angeordneten Elektroden 21 und 22. Durch Anlegen von Spannungen an diese Elektroden kann die Phasenlage einer im Wellenleiter 4 geführten Welle beeinflußt werden.

Die in Fig. 6 dargestellte Anordnung entspricht bezüglich der Einrichtungen zur Reflexionsisolation der Ausführungsform der Erfindung gemäß Fig. 1. Als monolithisch integrierbar sind gemäß Fig. 6 das Polarisationsfilter 10, der Richtkoppler 13, der TE/TM-Konverter 11 und der Phasenschieber 12 zusammenfaßt. Die Koppelstelle 25 des "Monitor"-Wellenleiters 26 sollte mit einer Antireflexionsschicht versehen und/oder die Kopplung zwischen den Wellenleitern 4 und 26 schwach sein, um von hier ausgehende, störende Reflexionen zu vermeiden.

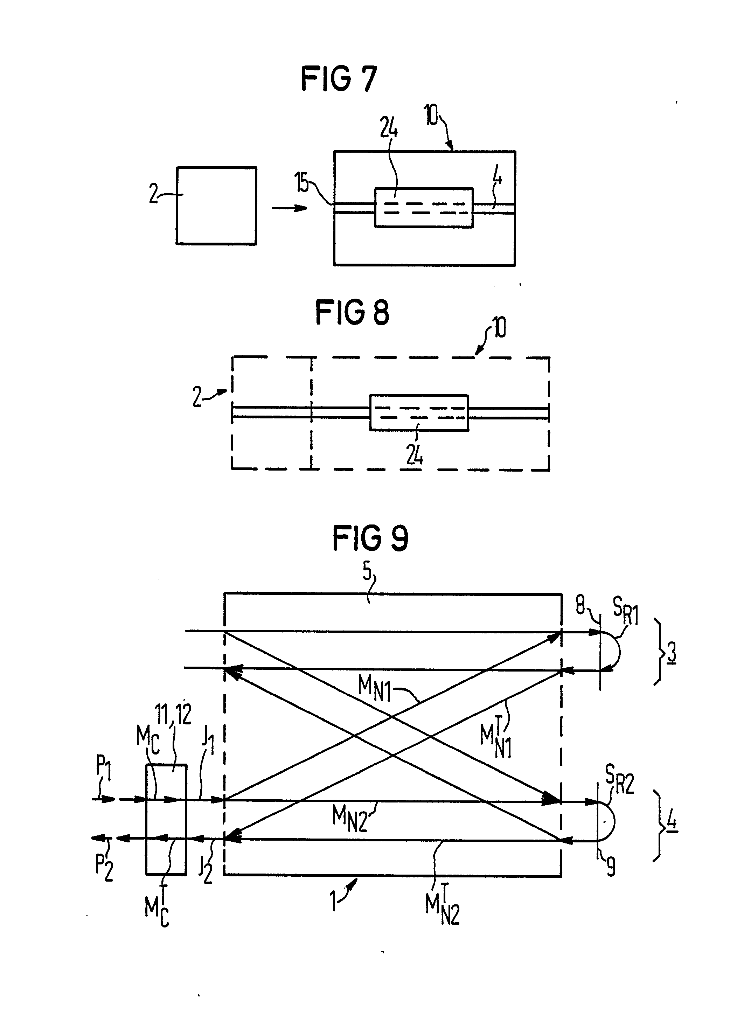

In den Fig. 7 und 8 sind die Anordnungen eines Polarisationsfilters 10 und des Lokaloszillators 2 als einzelne, hybrid zusammensetzbare Koponenten (Fig. 7) bzw. als monolithisch, auf elektro-optischem Halbleitermaterial integriert (Fig. 8) dargestellt. Die Einkoppelstelle 15 - und damit eine Reflexionsstelle - läßt sich gemäß Fig. 8 vermeiden; andererseits wird dadurch z.B die Auswechselbarkeit des Lasers 2 beeinträchtigt, da dieser jeweils mit dem zugehörigen Polarisationsfilter 10 dem Lieferanten bezogen werden müßte.

In der Figur 9 ist das dem Netzwerk 1 und der Anordnung zur Rflexionsisolation äquivalente Jones-Vektor-Diagramm dargestellt, in dem die Pfeile in den Elementen die Jones-Matrizen $M_{N1}$ und $M_2$ bzw. die transponierten Jones-Matrizen $M\,\widetilde{N}_1$ und $M\,\widetilde{N}_2$ darstellen. Die Pfeile zwischen den Elementen stellen Jones-Vektorendar, insbesondere die Vektoren $J_1$ und $J_2$ zwischen den Einrichtungen 11, 12 zur Reflexionsisolation und dem Richtkoppler 5. Die Reflexionsstellen 8 und 9 sind durch die Mikrowellenstreumatrizen $S_{R1}$ bzw. $S_{R2}$ der optischen Wellen repräsentiert.

Gemäß der obigen Gleichung (2) wird Isolation mit

$$M_i = M_{N_i}^T S_{R_i} M_{N_i} \text{ mit } i = 1, 2$$

erhalten. Die Jones-Matrix $M_C$ der Anordnung 11, 12 muß der Gleichung (3) genügen. Dabei wird vorausgesetzt, daß die Isolation als Kompensation erfolgt. Es genügt jedoch Orthogonalität der Polarisationszustände zur Isolation der rücklaufenden von der hinlaufenden Welle. Hat die durch das Polarisationsfilter hinlaufende, dem Netzwerk 1 zugeführte Welle den Polarisationszustand P1, dann hat die aus dem Netzwerk 1 reflektierte und aus der Anordnung 11, 12 rücklaufende Welle den dem Zustand P1 orthogonalen Polarisationszustand P2, der vom Polarisationsfilter abgeblockt wird.

Durch das vorstehend beschriebene Isolationsprinzip kann der Lokaloszillator-Laser 2 eines optischen Homodyn-oder Heterodynempfängers gegen Reflexionen isoliert werden, so daß seine Stabilität und Abstimmbarkeit erhalten bleiben. Der Isolator selbst kann zusammen mit einem optischen Homodyn-bzw. Heterodynempfänger integriert werden.

## Bezugszeichen - Liste

| | | |
|---|---|---|
| 1 | Netzwerk | (NETW) |
| 2 | opt. Sende-Komponente | (LO) |
| 3 | Wellenleiter | (WL1) |
| 4 | Wellenleiter | (WL2) |
| 5 | Richtkoppler | |
| 6 | Photodiode 1 | (PD1) |
| 7 | Photodiode 2 | (PD2) |
| 8 | Reflexionsstelle | (RS1) |
| 9 | Reflexionsstelle | (RS2) |
| 10 | Polarisations-Filter | (POL) |
| 11 | TE/TM-Konverter | (PC) |
| 12 | Phasenschieber | (PM) |

(PC), (PM) } (CD.) } (IS)

| | | |
|---|---|---|
| 13 | Richtkoppler (Monitor-Ausg.) | |
| 14 | entfernter Teilnehmer (Sender) | |
| 15 | Einkoppelstelle | |
| 16 | Substrat | (K) |
| 17 | Elektrode | (E1) |
| 18 | Elektrode | (E2) |
| 19 | Elektrode | (E3) |
| 20 | Elektrode | (E4) |
| 21 | Elektrode | (E5) |
| 22 | Elektrode | |
| 23 | Elektrode | |
| 24 | Dämpfungsschicht | |
| 25 | Koppelstelle (zum Monitor) | |
| 26 | Wellenleiter | |
| P1 | Polarisationszustand | |
| P2 | Polarisationszustand | |
| (- | Ende des Wellenleiters | (e, e1, e2) ) |
| (- | Ausbreitungsrichtung | (a1, a2) ) |
| (- | Polarisationszustand | (P1, P2) ) |
| (- | ausgesandte Strahlung | (eS) ) |
| (- | reflektierte Strahlung | (rS) ) |

**Ansprüche**

1. Netzwerk (1), welches:
- aus optischen und elektro-optischen, optisch reziproken Elementen aufgebaut ist,
- an eine Komponente (2) koppelbar ist, die eine optische Welle in dieses Netzwerk (1) einspeist,
- anisotrope Reflexionen bewirkende Stellen (8, 9) aufweist
und
- eine Anordnung von Elementen besitzt, welche die optische Sende-Komponente (2) gegen anisotrope Reflexionen aus diesem Netzwerk (1) isolieren,
insbesondere als optische Homodyn-oder Heterodyn-Empfängerschaltung ausgebildetes Netzwerk,
**gekennzeichnet durch**
- ein Filter (10) für linear polarisierte optische Wellen,
- einen Modenkoppler (5, 11)
und
- einen Phasenschieber (12)
zur Reflexions-Isolierung der optischen Sende-Komponente (2), wobei diese Elemente (10, 5 bzw. 11, 12) - in Richtung der hinlaufenden optischen Welle gesehen - in der angegebenen Reihenfolge hinter der Einkoppelstelle (15) der optischen Sende-Komponente (2) liegen.

2. Netzwerk nach Anspruch 1,
**gekennzeichnet durch**
einen als steuerbarer TE/TM-Konverter (11) ausgebildeten Modenkoppler.

3. Netzwerk nach Anspruch 1,
**gekennzeichnet durch**
einen Modenkoppler, der im wesentlichen als Richtkoppler (5) für die Überlagerung der in den beiden Wellenleitern (3, 4) geführten optischen Wellen ausgebildet ist, jedoch Elektroden (22, 23) zur Beeinflussung der Modenkopplung zwischen hin-und rücklaufenden optischen Wellen aufweist.

4. Netzwerk nach Anspruch 2 oder 3,
**gekennzeichnet durch**
einen Richtkoppler (13), der in Richtung einer im Wellenleiter (3 bzw. 4) hinlaufenden Welle gesehen unmittelbar vor dem Modenkoppler (5, 11) angeordnet ist und einen Ausgang für den Anschluß eines Monitors bzw. für die Abnahme einer Regelgröße besitzt.

5. Netzwerk nach Anspruch 2,
**gekennzeichnet durch**
eine Ausbildung des TE/TM-Konverters (11) und des Phasenschiebers (12) als monolithisches Bauteil.

6. Netzwerk nach Anspruch 2,
**gekennzeichnet durch**
eine Ausbildung des Filters (10), des TE/TM-Konverters (11) und des Phasenschiebers (12) als monolithisches Bauteil.

7. Netzwerk nach Anspruch 4,
**gekennzeichnet durch**
eine Ausbildung des Filters (10), des Richtkopplers (13), des TE/TM-Konverters (11) und des Phasenschiebers (12) als monolithisches Bauteil.

8. Netzwerk nach Anspruch 2 oder 4,
**gekennzeichnet durch**
eine Ausbildung der optischen Sendekomponente (2) - eines Lasers -, der optisch reziproken Elemente - insbe sondere des Filters (10), gegebenenfalls des Richtkopplers (13), des TE/TM-Konverters (11), des Phasenschiebers (12), des Richtkopplers (5) - und der Photodioden (6, 7) als monolithisches Bauteil auf halbleitendem, elektro-optischem Material für das Substrat (16).

9. Netzwerk nach Anspruch 3,
**gekennzeichnet durch**
eine Ausbildung des mit Elektroden (22, 23) versehenen Richtkopplers (5) und je eines Phasenschiebers (12) an den beiden Wellenleitern (3, 4) als monolithisches Bauteil.

10. Netzwerk nach Anspruch 3,
**gekennzeichnet durch**
eine Ausbildung des Filters (10), des mit Elektroden (22, 23) versehenen Richtkopplers (5) und je eines Phasenschiebers (12) an den beiden Wellenleitern (3, 4) als monolithisches Bauteil.

11. Netzwerk nach Anspruch 4,
**gekennzeichnet durch**
eine Ausbildung des Filters (10), des Richtkopplers (13), des mit Elektroden (22, 23) versehenen Richtkopplers (5) und je eines Phasenschiebers (12) an den beiden Wellenleitern (3, 4) als monolithisches Bauteil.

12. Netzwerk nach einem der Ansprüche 5 bis 7 oder 9 bis 11,
**gekennzeichnet durch**
Lithiumniobat - LiNbO₃ -als Material des Substrats (16) für das monolithische Bauteil.

13. Netzwerk nach Anspruch 3 oder 4,
**gekennzeichnet durch**
eine Ausbildung der optischen Sende-Komponente (2) - eines Lasers -, der reziproken Elemente - insbesondere des Filters (10), gegebenenfalls des Richtkopplers (13), des mit Elektroden (22, 23) versehenen Richtkopplers (5), der Phasenschieber (12) an den Wellenleitern (3, 4) -und der Photodioden (6, 7) als monolithisches Bauteil auf halbleitendem, elektro-optischem Material für das Substrat (16).

14. Netzwerk nach Anspruch 5 oder 10,
**gekennzeichnet durch**
einen Aufbau der optischen Sendekomponente (2) und des Filters (10) als monolithisches Bauteil auf halbleitendem, elektro-optischem Material.

## FIG 1

## FIG 2

# FIG 3

11,12

2

24

4

17

18

10

19

# FIG 4

11

12

17

20

4

18

19

21

# FIG 5

# FIG 6

# FIG 7

# FIG 8

# FIG 9